Europäisches Patentamt

European Patent Office   (11) Numéro de publication: **0 011 010**

Office européen des brevets   **B1**

(19)

(12)   **FASCICULE DE BREVET EUROPEEN**

(45) Date de publication du fascicule du brevet: 08.06.83   (51) Int. Cl.³: **F 16 D 3/22**

(21) Numéro de dépôt: **79400750.0**

(22) Date de dépôt: **15.10.79**

(54) Joint universel coulissant, notamment pour transmissions de véhicules automobiles.

(30) Priorité: **27.10.78 FR 7830648**

(43) Date de publication de la demande:
**14.05.80 Bulletin 80/10**

(45) Mention de la délivrance du brevet:
**08.06.83 Bulletin 83/23**

(84) Etats contractants désignés:
**DE GB IT SE**

(56) Documents cités:
CH - A - 250 987
FR - A - 1 445 289
FR - A - 1 529 322
FR - A - 1 537 620
FR - A - 1 547 574
FR - A - 2 035 085
FR - A - 2 049 283
FR - A - 2 064 807
FR - A - 2 073 671
FR - A - 2 101 414
FR - A - 2 205 140
FR - A - 2 257 042

(73) Titulaire: **SOCIETE ANONYME AUTOMOBILES CITROEN**
**117 à 167, Quai André Citroen**
**F-75747 Paris Cedex 15 (FR)**

(73) Titulaire: **AUTOMOBILES PEUGEOT**
**75, avenue de la Grande Armée**
**F-75116 Paris (FR)**

(72) Inventeur: **Dore, Jacques Pierre**
**191, rue Saint-Denis**
**F-92000 Colombes (FR)**

(74) Mandataire: **Michardière, Bernard et al,**
**Cabinet Plasseraud 84, rue d'Amsterdam**
**F-75009 Paris (FR)**

(56) Documents cités:
FR - A - 2 275 673
FR - A - 2 278 012
FR - A - 2 360 793
FR - A - 2 396 205
GB - A - 916 297
US - A - 2 235 002

Courier Press, Leamington Spa, England.

### Joint universel coulissant, notamment pour transmissions de véhicules automobiles.

L'invention est relative aux joints universels coulissants, notamment pour transmission de véhicules automobiles, du genre de ceux qui comprennent un élément d'entraînement, sensiblement en forme de bol, solidaire d'un arbre menant et présentant au moins deux chemins de roulement coopérant avec des galets portés par un moyeu solidaire d'un arbre mené, des moyens d'arrêt étant en outre prévus à l'extrémité ouverte de l'élément d'entraînement pour retenir les galets et l'extrémité de l'arbre mené à l'intérieur de cet élément, ces moyens d'arrêt étant agencés de manière telle que lorsqu'un galet est en appui contre eux, une partie de ce galet se trouve à l'extérieur de l'élément d'entraînement tandis que le centre du galet ainsi retenu se trouve au voisinage de l'extrémité ouverte de l'élément.

Plus particulièrement, l'invention concerne des joints universels coulissants du type tripode présentant trois chemins de roulement rectilignes parallèles espacés circonférentiellement de 120°.

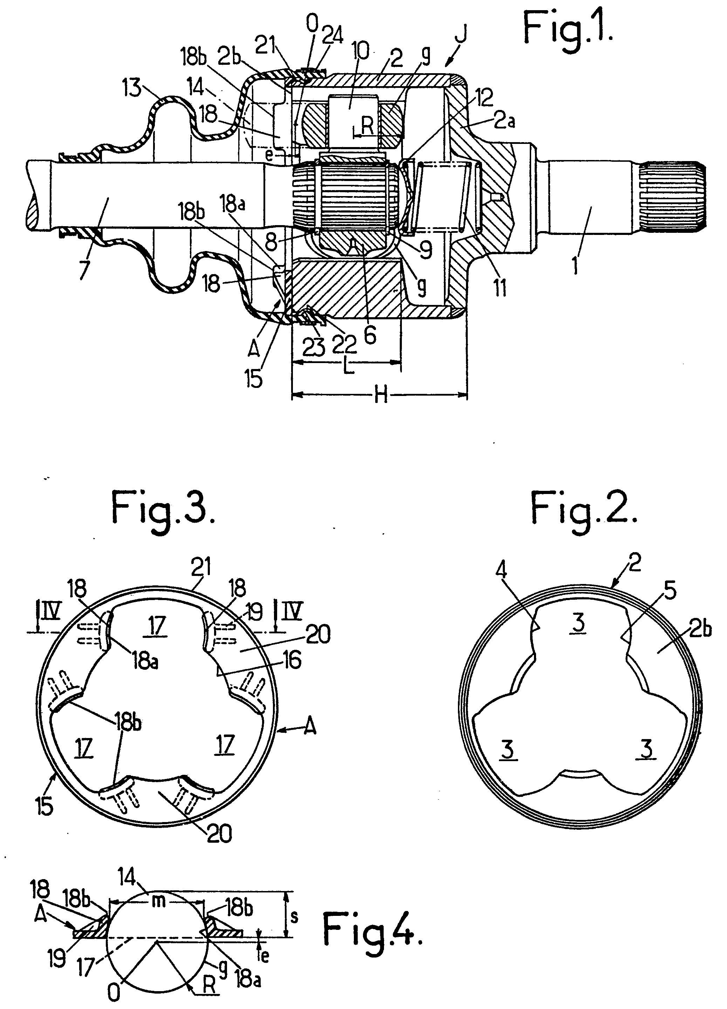

Le document FR—A—1 537 620 montre, en particulier sur la figure 1, un joint universel de ce genre. Toutefois, les moyens d'arrêt, et par conséquent le joint dans son ensemble, présentent un encombrement axial relativement important qui est gênant pour loger un tel joint dans un espace réduit.

Le document FR—A—N° 1 529 322 montre, également, un joint universel dans lequel les moyens d'arrêt présentent un encombrement non négligeable dans la direction axiale; en outre, ces moyens d'arrêt ne sont pas agencés pour permettre aux galets de sortir en partie de l'élément d'entraînement. Il en résulte que pour une même course axiale des galets, le chemin de roulement et donc la longueur axiale de l'élément d'entraînement devra être plus importante que dans le cas où les galets peuvent sortir, en partie, de l'élément d'entraînement.

Le document FR—A—2 064 807 concerne un joint universel dans lequel les moyens d'arrêt sont constitués par une extrémité déformée d'un tube, et présentent un encombrement axial non négligeable.

Le document FR—A—2 360 793 montre un joint universel dans lequel un boîtier, muni à une extrémité d'une sorte de coupelle, peut être enfilé sur l'élément d'entraînement pour retenir les galets à l'intérieur de cet élément. Toutefois, les languettes prévues pour tenir les galets font saillie, dans les chemins de roulement, vers l'intérieur de l'élément d'entraînement et réduisent la course axiale des galets.

L'invention a pour but, surtout, de rendre les joints universels du genre défini précédemment, tels qu'ils soient d'un encombrement axial réduit et d'une réalisation économique, sans qu'il en résulte des inconvénients lors des opérations de montage ou de démontage du joint ou lors de son fonctionnement.

Selon l'invention, un joint universel coulissant du genre défini précédemment est caractérisé par le fait que les moyens d'arrêt sont constitués, d'une manière connue en elle-même, par une coupelle présentant une ouverture centrale, pour le passage de l'arbre mené, bordée d'échancrures destinées à venir dans le prolongement des chemins de roulement, et que ces échancrures sont limitées, dans le sens circonférentiel, par des languettes faisant saillie vers l'extérieur, dans le sens longitudinal, par rapport à l'extrémité ouverte de l'élément d'entraînement, ces languettes ayant une surface interne concave, notamment sphérique, les bords des languettes les plus éloignés de l'élément d'entraînement définissant une ouverture dont la dimension est suffisamment réduite pour retenir un galet.

La coupelle, selon l'invention, peut être réalisée en matière plastique moulée.

Avantageusement, lorsque l'élément d'entraînement présente une surface extérieure dont le contour est sensiblement parallèle au contour de sa surface intérieure, de tell sorte que cette surface extérieure comporte des zones concaves, la coupelle en matière plastique comporte une collerette, d'une part, propre à s'engager sur la surface extérieure de l'élément d'entraînement et à compenser les zones concaves et, d'autre part, dont la surface extérieure est entièrement convexe, notamment cylindrique de révolution, de manière à pouvoir servir de support à l'extrémité d'une gaine d'étanchéité.

La longueur axiale de l'élément d'entraînement est choisie de manière que les chemins de roulement aient une longueur juste suffisante pour permettre d'assurer la course utile des galets.

L'invention consiste, mises à part les dispositions exposées ci-dessus, en certaines autres dispositions dont il sera plus explicitement question ci-après, à propos de modes de réalisation particuliers décrits avec référence aux dessins ci-annexés, mais qui ne sont nullement limitatifs.

La figure 1, de ces dessins, est une coupe axiale d'un universel coulissant, du type tripode, conforme à l'invention.

La figure 2 est une vue de gauche par rapport à la figure 1, de l'élément d'entraînement du joint.

La figure 3 est une vue de droite, par rapport à la figure 1, des moyens d'arrêt formés par la coupelle.

La figure 4 est une coupe partielle suivant IV—IV figure 3.

La figure 5 est une coupe axiale partielle d'une variante de réalisation.

La figure 6 est une coupe axiale partielle d'une variante de réalisation pour un élément d'entraînement dont la surface extérieure est sensiblement parallèle à la surface intérieure.

La figure 7, enfin est une coupe suivant VII—VII, figure 6.

En se reportant aux dessins, plus particulièrement à la figure 1, ou peut voir un joint universel coulissant J, du type tripode, pour transmission de véhicule automobile. Un tel joint est couramment monté, par exemple, dans des véhicules à traction avant, à la sortie du différentiel; le joint J comporte un arbre menant 1 relié, par exemple, à un différentiel (non montré); un élément d'entraînement 2, sensiblement en forme de bol, est solidaire de l'arbre 1. L'élément d'entraînement 2 présente trois chemins de roulement 3 (figure 2) rectilignes, sensiblement parallèles à l'axe de l'arbre 1, régulièrement espacés angulairement de 120°. La surface extérieure de l'élément 2, dans le cas des figures 1, 2 et 5, est cylindrique de révolution.

Ces chemins de roulement 3 sont formés par des gorges dont les flancs 4, 5, sont limités par des surfaces concaves cylindriques, dont les génératrices sont sensiblement parallèles à l'axe de l'arbre 1, et dont la concavité est tournée vers le chemin de roulement 3.

Chaque chemin de roulement 3 coopère avec un galet $g$ porté par un moyeu 6 solidaire d'un arbre mené 7. Comme visible sur la figure 1, le moyeu 6 est lié en rotation à l'arbre 7 par un jeu de cannelures et de nervures longitudinales prévues respectivement sur l'arbre et dans un alésage du moyeu 6 engagé autour de l'arbre 7. Le blocage, dans le sens axial, du moyeu 6 par rapport à l'arbre 7 est assuré par deux bagues fendues élastiques 8, 9, ancrées dans des gorges prévues sur l'arbre 7.

Chaque galet $g$ a la forme d'un segment sphérique et est monté libre en rotation sur un pivot radial 10 du moyeu 6. Trois pivots 10, décalés angulairement de 120°, font donc saillie sur la périphérie du moyeu 6.

Chaque galet $g$ peut coulisser et tourner librement dans le chemin de roulement 3 associé, la surface sphérique de ce galet étant au contact des flancs 4 et 5.

Dans l'exemple envisagé précédemment, d'un véhicule à traction avant, l'arbre mené 7 est relié, par l'intermédiaire d'un joint universel (non représenté) à une roue avant motrice et directrice.

Un moyen élastique, notamment formé par un ressort de compression 11 en hélice, peut être disposé entre le fond 2$a$ de l'élément d'entraînement et une coupelle 12 en appui contre l'extrémité de l'arbre mené 7, situé à l'intérieur de l'élément d'entraînement 2; le ressort 11 exerce un effort axial sur l'arbre 7 en vue du centrage du moyeu 6 dans l'élément d'entraînement 2.

L'extrémité 2$b$ de l'élément 2, éloignée du fond 2$a$, est ouverte. Des moyens d'arrêt A sont prévus à cette extrémité ouverte 2$b$ pour retenir les galets $g$, et donc le moyeu 6 et l'extrémité de l'arbre 7, à l'intérieur de l'élément d'entraînement 2. Une gaine d'étanchéité 13, formée par un soufflet en matière élastomère, entoure, d'une part, l'extrémité ouverte 2$b$ de l'élément d'entraînement 2 et, d'autre part, l'arbre mené 7.

Les moyens d'arrêt A sont agencés de manière telle que lorsqu'un galet $g$ est un appui contre ces moyens A (comme représenté en trait mixte sur la figure 1 et en trait plein sur la figure 4), une partie 14 de ce galet se trouve à l'extérieur de l'élément d'entraînement 2, tandis que le centre 0 du galet ainsi retenu se trouve au voisinage de l'extrémité ouverte 2$b$ de l'élément. Par l'expression "au voisinage", il faut entendre que la distance $e$ entre le centre 0 du galet, retenu par les moyens A, et l'extrémité 2$b$, est très inférieure au rayon R du galet ($e \ll R$). Advantageusement, $e/R$ est inférieur à 1/10 (un dixième) ($e < R/10$).

L'ensemble est agencé, généralement, de telle sorte que le centre 0 du galet $g$ ainsi retenu se trouve à l'intérieur de l'élément 2.

La longuer axiale H de l'élément d'entraînement 2 est choisie de manière que les chemins de roulement 3 aient une longueur L juste suffisante pour permettre d'assurer la course utile des galets $g$.

Dans la solution des figures 1 à 4, les moyens d'arrêt A sont constitués par une coupelle 15 présentant une ouverture centrale 16, pour le passage de l'arbre mené 7; les dimensions de cette ouverture 16 sont suffisantes pour permettre les débattements angulaires de l'arbre 7. Cette ouverture 16 est bordée de trois échancrures 17, régulièrement réparties dans le sens circonférentiel; ces échancrures 17 sont destinées à venir dans le prolongement des chemins de roulement 3 de manière à permettre à la partie 14 du galet $g$ de faire saillie au-delà de l'extrémité 2$b$.

Ces échancrures 17 sont limitées, dans le sens circonférentiel, par des languettes 18 faisant saillie, vers l'extérieur, dans le sens longitudinal comme visible sur la figure 1, par rapport à l'extrémité ouverte 2$b$.

Deux languettes 18, comme visible d'après les figures 3 et 4, sont prévues de part et d'autre de chaque échancrure 17. Des goussets 19, de raidissement, sont prévus pour le renforcement de ces languettes 18 et pour augmenter leur résistance à l'écartement sous l'effet de la poussée d'un galet $g$.

Les languettes 18 ont une surface interne 18$a$ concave, sphérique; les bords 18$b$ (voir notamment figures 3 et 4) des languettes, les plus éloignés de l'élément d'entraînement 2, définissent une ouverture dont la dimension $m$ dans un plan de coupe passant par le centre du galet correspondant, ce plan étant perpendiculaire à l'axe du pivot 10, est suffisamment réduite pour retenir un galet $g$. Ce galet, lorsqu'il est en butée contre les surfaces internes 18$a$ des languettes 18, comme montré sur la figure 4, fait saillie par la partie 14 sur l'extrémité ouverte 2*b*, et le centre 0 du galet se trouve au voisinage de cette extrémité 2*b*.

La coupelle 15 comporte, entre les échancrures 17, des parois planes 20 destinées à venir prendre appui contre l'extrémité ouverte 2*b* de l'élément 2; le plan des parois 20, lorsque la coupelle 15 a été mise en place, est perpendiculaire à l'axe de l'élément 2.

La coupelle 15 comporte, sur son bord extérieur, une jupe 21, sensiblement cylindrique, propre à entourer la surface extérieure d'extrémité de l'élément 2. Cette jupe 21 comporte un bourrelet 22 à section semi-circulaire, faisant saillie vers l'intérieur, et présentant une surface concave vers l'extérieur; ce bourrelet 22 est destiné à être clipsé, c'est-à-dire à entrer par encliquetage, dans une gorge 23 périphérique de l'élément 2, pour assurer la fixation de la coupelle 15. La surface concave vers l'extérieur du bourrelet 22 détermine une gorge propre à recevoir un bourrelet d'accrochage de la gaine d'étanchéité 13. Cette dernière est maintenue, autour de l'élément 2, par un serre-joint 24.

La coupelle 15 est avantageusement réalisée en matière plastique moulée.

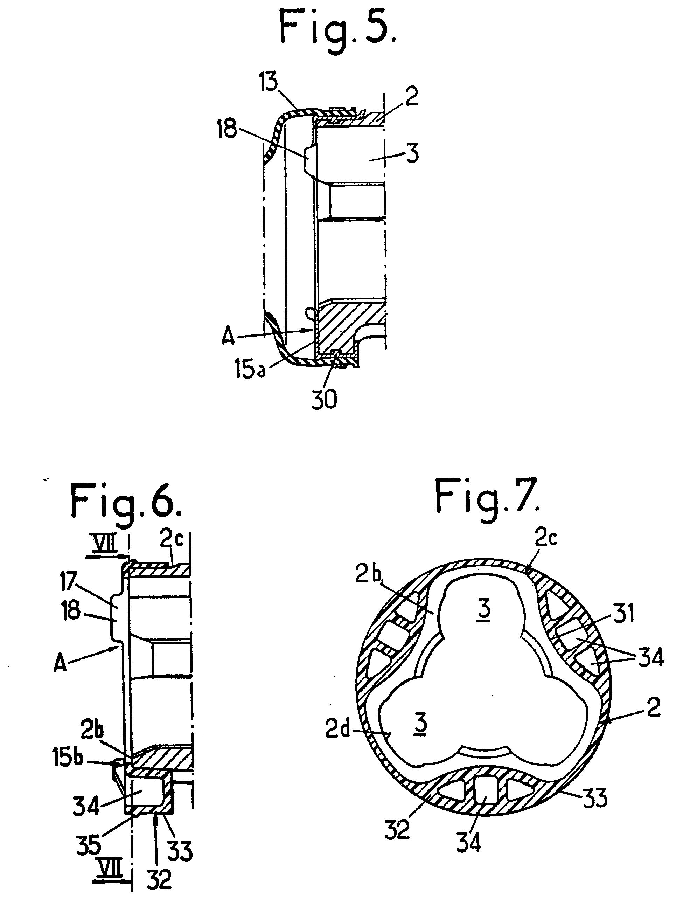

Sur la figure 5 on peut voir une variante de réalisation en tôle d'une coupelle 15*a* semblable à la coupelle 15 des figures 1 à 4. La coupelle 15*a* comporte une jupe cylindrique 30 entourant l'extrémité circulaire de l'élément 2. On a désigné par les mêmes chiffres de référence 18 les languettes de cette coupelle 15*a* semblables à celles des figures 1, 3 et 4. La fixation de la coupelle 15*a* sur l'élément 2 est assuré par sertissage de la jupe cylindrique 30 sur l'extrémité de l'élément 2.

Les figures 6 and 7 montrent une variante de réalisation particulièrement intéressante dans le cas où l'élément d'entraînement 2 présente une surface extérieure 2*c* sensiblement parallèle à la surface intérieure 2*d* de cet élément. La surface 2*c*, alors, n'est plus cylindrique de révolution, mais présente des zones concaves 31 (figure 7) situées, angulairement, entre les chemins de roulement 3. Une telle réalisation de l'élément d'entraînement 2 permet une économie de matière relativement coûteuse.

Les moyens d'arrêt A sont alors agencés sous la forme d'une coupelle 15*b* semblable, pour la partie située contre l'extrémité ouverte 2*b*, à la coupelle 15 de la figure 1; c'est-à-dire que cette coupelle 15*b* comporte des ouvertures 17 bordées par des languettes 18 identiques à celles des figures 1, 3 et 4.

Cette coupelle 15*b* comporte, en outre, une collerette 32 propre à s'engager sur la surface extérieure 2*c*, et à compenser les zones concaves 31 de manière que la surface extérieure 33 de cette collerette soit entièrement convexe, notamment cylindrique de révolution. Il apparaît donc, notamment d'après la figure 7, que l'épaisseur de cette collerette 32, dans le sens radial, est variable afin d'assurer la compensation des zones concaves 31; des alvéoles 34 peuvent être prévus dans les zones de plus forte épaisseur radiale de cette collerette 32.

Avantageusement, cette collerette est réalisée en matière plastique, et est surmoulée autour de l'extrémité de l'élément 2. Le blocage de la collerette 32 par rapport à l'élément 2 peut être assuré par un jeu d'encoches et de nervures périphériques (non montrées sur la figure 6).

La surface extérieure 33 comporte un bourrelet périphérique 35 propre à coopérer avec la gaine d'étanchéité qui vient entourer cette surface cylindrique 33. La fixation de la gaine peut ainsi être correctement assurée contre une surface cylindrique.

Quel que soit le mode de réalisation adopté, les moyens d'arrêt A prévus par l'invention, permettent, dans tous les cas, d'assurer aux galets *g* la course utile souhaitée, avec une longueur H de l'élément 2 minimale. On peut dire que, pour une course utile donnée, la solution de l'invention permet de réduire la longueur axiale de l'élément 2 de la valeur *s* (Fig. 4) dont fait saillie le galet *g* hors de l'élément 2, par rapport à une solution classique dans laquelle une paroi transversale est prévue à l'extrémité de l'élément d'entraînement pour retenir les galets *g* à l'intérieur de l'élément 2.

Cette économie est sensible car elle porte sur une matière relativement coûteuse, tout en permettant un allègement appréciable des pièces. On réalise, en outre, des économies sur les opérations d'usinage puisque les chemins de roulement 3, pour une même longueur utile de la course des galets *g*, ont une longueur réduite.

Cette économie est obtenue sans créer d'inconvénient lors du montage du joint puisque les moyens d'arrêt A assurent le maintien des galets *g* à l'intérieur de l'élément 2, même dans le cas d'une solution comportant le ressort 11 exerçant une poussée sur les éléments menés.

Il est clair que l'invention peut s'appliquer à tout type de joint de transmission universel coulissant, le joint du type tripode décrit avec référence aux dessins ne constituant qu'un cas particulier.

Le terme "galet" utilisé dans la description et dans les revendications doit être compris dans un sens large comme désignant tout organe de roulement, notamment une bille.

## Revendications

1. Joint universel coulissant, notamment pour transmission de véhicule automobile, plus particulièrement du type tripode, comprenant un élément d'entraînement (2), sensiblement en forme de bol, solidaire d'un arbre menant (1) et présentant au moins deux chemins de roulement (3) coopérant avec des galets (g) portés par un moyeu (6) solidaire d'un arbre mené (7), des moyens d'arrêt (A) étant, en outre, prévus à l'extrémité ouverte (2*b*) de l'élément d'entraînement pour retenir les galets et l'extrémité de l'arbre mené à l'intérieur de cet élément, ces moyens d'arrêt (A) étant agencés de manière telle que lorsqu'un galet est en appui contre eux, une partie (14) de ce galet se trouve à l'extérieur de l'élément d'entraînement (2), tandis que le centre (O) du galet ainsi retenu se trouve au voisinage de l'extrémité ouverte de cet élément, caractérisé par le fait que les moyens d'arrêt (A) sont constitués, d'une manière connue en elle-même, par une coupelle (15, 15a, 15b) présentant une ouverture centrale (16), pour le passage de l'arbre mené (7), bordée d'échancrures (17) destinées à venir dans le prolongement des chemins de roulement, et que ces échancrures (17) sont limitées, dans le sens circonférentiel, par des languettes (18) faisant saillie vers l'extérieur, dans le sens longitudinal, par rapport à l'extrémité ouverte (2b) de l'élément d'entraînement (2), ces languettes ayant une surface interne (18a) concave, notamment sphérique, les bords (18b) des languettes les plus éloignés de l'élément d'entraînement (2) définissant une ouverture dont la dimension (m) est suffisamment réduite pour retenir un galet (g).

2. Joint universel selon la revendication 1, caractérisé par le fait que la coupelle (15, 15b) est réalisée en matière plastique moulée.

3. Joint universel selon la revendication 2, dans lequel l'élément d'entraînement (2) présente une surface extérieure (2c) dont le contour est sensiblement parallèle au contour de sa surface intérieure (2d), de telle sorte que cette surface extérieure comporte des zones concaves (31), caractérisé par le fait que la coupelle (15b) comporte une collerette (32), d'une part, propre à s'engager sur la surface extérieure (2c) de l'élément d'entraînement (2) et à compenser les zones concaves (31) et, d'autre part, dont la surface extérieure (33) est entièrement convexe, notamment cylindrique de révolution, de manière à pouvoir servir de support à l'extrémité d'une gaine d'étanchéité.

4. Joint universel selon la revendication 3, caractérisé par le fait que la coupelle (15b) est surmoulée autour de l'extrémité de l'élément d'entraînement (2).

5. Joint universel selon la revendication 1, caractérisé par le fait que la coupelle (15a) est réalisée en tôle.

6. Joint universel selon l'une quelconque des revendications précédentes, caractérisé par le fait que la longueur axiale de l'élément d'entraînement (2) est choisie de manière que les chemins de roulement (3) aient une longueur juste suffisante pour permettre d'assurer la course utile des galets (g).

7. Joint universel selon l'une quelconque des revendications précédentes, caractérisé par le fait que la distance (e) entre le centre d'un galet (g) en appui contre la coupelle (15, 15a, 15b) et l'extrémité ouverte (2b) de l'élément d'entraînement est inférieure au dixième du rayon (R) du galet (e < R/10).

8. Moyens d'arrêt pour joint unversel selon l'une quelconque des revendications 1 à 7, caractérisée par le fait qu'ils sont formés par une coupelle (15, 15a, 15b), notamment en matière plastique moulée, présentant une ouverture centrale (16) pour le passage de l'arbre mené (7), bordée d'échancrures (17), destinées à venir dans le prolongement des chemins de roulement, ces échancrures (17) étant limitées, dans le sens circonférentiel, par des languettes (18) faisant saillie vers l'extérieur, dans le sens longitudinal, par rapport à l'extrémité ouverte (2b) de l'élément d'entraînement (2), ces languettes ayant une surface interne (18a) concave, notamment sphérique, les bords (18b) des languettes les plus éloignés de l'élément d'entraînement définissant une ouverture dont la dimension (m) est suffisamment réduite pour retenir un galet (g).

**Patentansprüche**

1. Verschiebbare Gelenkkupplung, insbesondere zum Antrieb von Kraftfahrzeugen, in dreischenkliger Bauart

— mit einem miteiner Antriebswelle (1) fest verbundenen im wesentlichen schalenförmigen Mitnehmerelement (2), das wenigstens zwei Wälzbahnen (3) aufweist, dit mit Rollen (g) zusammenwirken, welche von einer fest mit einer Abtriebswelle verbundenen Nabe (6) getragen sind,

— ferner mit an dem offenen Ende (2b) des Mitnehmerelements vorgesehenen Arretiermitteln (A), durch welche die Rollen und das Ende der Abtriebswelle (7) im Innern des Mitnehmerelements gehaltert sind und die (A) in der Weise angeordnet sind, daß dann, wenn eine Rolle an ihnen anliegt, ein Teil dieser Rolle sich außerhalb des Mitnehmerelements (2) befindet, während das Zentrum (0) der auf diese Weise gehaltenen Rolle sich in der Nachbarschaft des offenen Endes des Mitnehmerelements befindet, dadurch gekennzeichnet,

— daß die Arretiermittel in an sich bekannter Weise von einer Kappe (15, 15a, 15b) gebildet sind, die eine zentrale Öffnung (16) für den Durchtritt der Abtriebswelle (7) aufweist, wobei diese Öffnung (16) von in der Verlängerung der Wälzbahnen liegenden bogenförmigen Aussparungen (17) umgeben ist,

— und daß die Aussparungen (17) in Umfangsrichtung von Zungen (18) begrenzt sind, die relativ zu dem offenen Ende (2b) des Mitnehmerelements (2) in Längsrichtung nach außen ragen und die eine konkave, insbesondere eine sphärische Innenfläche (18a) besitzen, wobei die von dem Mitnehmerelement (2) am weitesten entfernten Ränder (18b) der Zungen eine Öffnung begrenzen, deren Abmessung (m) genügend klein ist, um eine Rolle (g) zu halten.

2. Gelenkkupplung nach Anspruch 1, dadurch gekennzeichnet, daß die Kappe (15, 15b) als Kunststofformteil hergestellt ist.

3. Gelenkkupplung nach Anspruch 2, bei welcher die Kontur der Außenfläche (2c) des Mitnehmerelements (2) im wesentlichen parallel zur Kontur seiner Innenfläche (2d) verläuft, derart daß diese Außenfläche konkave Zonen (31) aufweist, dadurch gekennzeichnet, daß die Kappe (15b) einen Kragen (32) besitzt, der einerseits an der Außenfläche (2c) des Mitnehmerelements (22) anliegt und die konkaven Zonen (31) ausgleicht und der andererseits eine Außenfläche (33) besitzt, die gänzlich konvex, insbesondere rotationszylindrisch ist, derart daß sie einem Ende einer Dichtungsmanchette als Auflager dienen kann.

4. Gelenkkupplung nach Anspruch 3, dadurch gekennzeichnet, daß die Kappe (15b) über dem Endbereich des Mitnehmerelements ausgeformt ist.

5. Gelenkkupplung nach Anspruch 1, dadurch gekennzeichnet, daß die Kappe (15a) aus Blech hergestellt ist.

6. Gelenkkupplung nach einem der vorhergehenden Ansprüche, dadurch gekennzeichnet, daß die axiale Länge des Mitnehmerlements (2) so gewählt ist, daß die Wälzbahnen (3) eine Länge besitzen, welche ausreicht, den Betätigungsweg der Rollen (g) sicherzustellen.

7. Gelenkkupplung nach einem der vorhergehenden Ansprüche, dadurch gekennzeichnet, daß der Abstand (e) zwischen dem Zentrum (0) einer sich an der Kappe (15, 15a, 15b) abstützenden Rolle (g) und dem offenen Ende (2b) des Mitnehmerelements kleiner ist als der zehnte Teil des Radius (R) der Rolle (e < R/10).

8. Arretiermittel für eine Gelenkkupplung nach einem der Ansprüche 1 bis 7, dadurch gekennzeichnet,

— daß sie von einer vorzugsweise aus einem Kunststofformteil bestehenden Kappe (15, 15a, 15b) gebildet sind, die eine zentrale Öffnung für den Durchtritt der Abtriebswelle (7) aufweist, wobei diese Offnung (16) von in der Verlängerung der Wälzbahnen (3) liegenden bogenförmigen Aussparungen (17) umgeben Ist,

— und daß die Aussparungen (17) in Umfangsrichtung von Zungen (18) begrenzt sind, die relativ zu dem offenen Ende (2b) des Mitnehmerelements (2) in Längsrichtung nach außen ragen und eine konkave, insbesondere sphärische Innenfläche (18a) besitzen, wobei die von dem Mitnehmerelement (2) am weitesten entfernt liegenden Ränder (18b) der Zungen (18) eine Öffnung begrenzen, deren Abmessung (m) genügend klein ist, um eine Rolle (g) halten zu können.

## Claims

1. A sliding universal joint, especially for an automobile transmission, more particularly of the tripod type, comprising a substantially bowl-shaped drive element (2) connected to a drive shaft (1) and having at least two ball races (3) coperating with rollers (g) borne by a hub (6) connected to a driven shaft (7), stop means (A) being moreover provided at the open end (2b) of the drive element for retaining the rollers and the end of the driven shaft inside the drive element, said stop means (A) being arranged so that when a roller is supported against the stop means, a part (14) of this roller is outside the drive element (2) while the center (0) of the roller thus retained is near the open end of this element characterized by the fact that the stop means (A) comprises, in a manner known per se, a cup (15, 15a, 15b) having a central opening (16) for the passage of the driven shaft (7), bordered by indentations (17) for becoming extension of the ball races, and that these indentations (17) are bounded, in the circumferential direction, by tongues (18) projecting outwards in the longitudinal direction with respect to the open end (2b) of the drive element (2), these tongues having a concave inner surface (18a), especially spherical, the edges (18b) of the tongues furthest from the drive element (2) defining an opening whose size (m) is sufficiently small to retain a roller (g).

2. Universal joint according to claim 1 characterized by the fact that said cup (15, 15b) is formed of molded plastics material.

3. Universal joint according to claim 2 wherein the drive element (2) has an outer surface (2c) whose contour is substantially parallel with the contour of its inner surface (2d) so that this outer surface includes concave zones (31) characterized by the fact that the cup (15b) includes a collar (32), on the one hand, adapted to engage the outer surface (2c) of the drive element (2) and to compensate the concave zones (31) and, on the other hand, whose outer surface (33) is entirely convex, especially a cylinder of revolution, so as to be able to serve as a support for the end of a sealing sheath.

4. Universal joint according to claim 3 characterized by the fact that the cup (15b) is overmolded around the end of the drive element (2).

5. Universal joint according to claim 1 characterized by the fact that the cup (15a) is formed from sheet metal.

6. Universal joint according to any of the previous claims characterized by the fact that the axial length of the drive element (2) is selected so that said ball races (3) have just sufficient length to ensure the useful travel of the rollers (g).

7. Universal joint according to any of the previous claims characterized by the fact that the distance (e) between the center of a roller (g) supported against the cup (15, 15a, 15b) and the open end (2b) of the drive element is less than one tenth of the radius (R) of the roller (e < R/10).

8. Stop means for a universal joint according to any of claims 1 to 7, characterized by the fact that they are formed from a cup (15, 15a, 15b), especially from molded plastics material, having a central opening (16) for the passage of the driven shaft (7), bordered by indentations (17) for becoming extension of the ball races, and that these indentations (17) are bounded, in the circumferential direction, by tongues (18) projecting outwards in the longitudinal direction with respect to the open end (2b) of the drive element (2), these tongues having a concave inner surface (18a), especially spherical, the edges (18b) of the tongues furthest from the drive element (2) defining an opening whose size (m) is sufficiently small to retain a roller (g).

0011010

Fig.1.

Fig.3.

Fig.2.

Fig.4.

# Fig. 5.

# Fig. 6.

# Fig. 7.